# EUROPÄISCHE PATENTSCHRIFT

(11) **EP 3 877 651 B1**
(45) Veröffentlichungstag und Bekanntmachung des Hinweises auf die Patenterteilung: **12.07.2023**
(21) Anmeldenummer: 19797209.4
(22) Anmeldetag: 25.10.2019
(51) Int. Cl.: F04B 35/00, F04B 35/01, F04B 39/12, F04B 39/14

(54) **GEHÄUSE SOWIE KOMPRESSOR UND KOMPRESSOR-EINHEIT MIT EINEM SOLCHEN GEHÄUSE**
HOUSING AND COMPRESSOR AND COMPRESSOR UNIT HAVING A HOUSING OF SAID TYPE
CARTER, COMPRESSEUR ET UNITÉ DE COMPRESSEUR DOTÉE D'UN TEL CARTER

(30) Priorität: 09.11.2018 DE 102018128111
(43) Veröffentlichungstag der Anmeldung: 15.09.2021
(73) Patentinhaber: KNORR-BREMSE Systeme für Nutzfahrzeuge GmbH, 80809 München (DE)
(72) Erfinder: MELLAR, Jörg, 85652 Pliening (DE); MAUPAS, Oliver, 14120 Mondeville (FR); GRINDEL, Daniel, 14100 Ouilly le Vicomte (FR); MARESCOT, Jean-Baptiste, 14340 Manerbe (FR); CHAMPON, Guillaume, 14100 Lisieux (FR); SEURIN, Laurent, 14100 Saint-Pierre des Ifs (FR)
(86) Internationale Anmeldenummer: PCT/EP2019/079189
(87) Internationale Veröffentlichungsnummer: WO 2020/094425

(56) Entgegenhaltungen:
- EP-A1- 0 270 713
- EP-A1- 2 427 668
- EP-A2- 0 853 200
- CN-A- 108 661 888

## Beschreibung

Die vorliegende Erfindung betrifft ein Gehäuse für eine Kurbelwelle für einen Antriebsstrang eines Kraftfahrzeugs, wie beispielsweise einen Lkw oder ein anderes Nutzfahrzeug, mit einem vorzugsweise einteilig ausgebildeten, vorzugsweise druckgegossenen, insbesondere aus Aluminium, Grauguss oder aus einer Aluminium- oder Graugusslegierung, Gehäusehauptkörper, welcher eine vorzugsweise konusartige, d.h., sich verjüngende, Öffnung und zumindest einen Zylinderraum, vorzugsweise zwei oder mehr Zylinderräume, aufweist, der sich in radialer Richtung durch den Gehäusehauptkörper bis zur Öffnung erstreckt, wobei die Öffnung an einem ersten axialen Ende des Gehäusehauptkörpers offen ist, und mit einem Gehäuseflansch, welcher an dem ersten axialen Ende des Gehäusehauptkörpers angeordnet ist, wobei in dem Gehäuseflansch ein Kolben derart axial verschieblich eingesetzt ist, dass zwischen dem Gehäuseflansch und dem Kolben ein Druckraum ausgebildet ist, der mittels eines Druckmediums, insbesondere Druckluft, mit Druck beaufschlagbar ist und zur axialen Verschiebung des Kolbens dient, wobei der Druckraum mit einer Zuführöffnung verbunden ist, über die das Druckmedium zuführbar ist. Ferner betrifft die Erfindung auch einen Kompressor mit einem erfindungsgemäßen Gehäuse sowie eine Kompressor-Einheit.

Ein einteilig hergestelltes Kurbelgehäuse ist bspw. aus der DE 10 2015 101 459 A1 bekannt. Diese offenbart ein einstückiges Gehäuse für einen Motor oder einen Kompressor mit einem länglichen Kurbelraum, welcher zwei Endflächen aufweist und zur Aufnahme einer Kurbelwelle dient. Ferner ist mindestens ein Zylinderraum vorgesehen, in dem ein Kolben durch eine Drehung der Kurbelwelle zu einer Hin- und Herbewegung angeregt wird. Der Kurbelraum weist an einer ersten Endfläche eine Öffnung auf, durch die die Kurbelwelle in ihn einführbar ist. Der Innendurchmesser des Kurbelraums verjüngt sich von der ersten Endfläche zur zweiten Endfläche.

Die EP 1 995 482 B1 offenbart eine Motor-Verdichter-Einheit mit einem Motor, einem Luftverdichter und einer Kupplung, die zwischen dem Motor und dem Luftverdichter angeordnet ist, wobei die Kupplung eine Nabe, ein Kupplungspaket, eine Federanordnung und einen Kolben aufweist, wobei die Nabe an einer mit der Luftverdichter verbundenen Welle befestigt ist, die Federanordnung das Kupplungspaket in einen geschlossenen Zustand beaufschlagt, in dem der Motor und der Luftverdichter triebschlüssig verbunden sind und der Kolben das Kupplungspaket öffnet, indem er auf Finger von Federn der Federanordnung drückt, wobei die Finger durch Schlitze innerhalb der Nabe laufen und die Finger einen Ruhepunkt an einem Außendurchmesser der Federanordnung und einen Kontaktpunkt mit dem Kupplungspaket haben, der zwischen dem Außendurchmesser und einem Innendurchmesser der Federanordnung liegt.

Aus der EP 2 123 929 B1 ist allgemein eine Kopplungsanordnung, insbesondere zur wahlweisen Drehkopplung einer Eingangswelle eines Kompressors in einem Fahrzeug mit einem Antriebsorgan bekannt. Die Kopplungsanordnung umfasst einen mit einem Antriebsorgan zur gemeinsamen Drehung um eine Drehachse gekoppelten oder zu koppelnden ersten Reibelemententräger, mit welchem die Reibelemente einer ersten Gruppe von Reibelementen drehfest und bezüglich diesem axial bewegbar gekoppelt sind, einen zweiten Reibelemententräger, mit welchem die Reibelemente einer zweiten Gruppe von Reibelementen drehfest und bezüglich diesem axial bewegbar gekoppelt sind, ein mit einem Abtriebsorgan zur gemeinsamen Drehung um die Drehachse gekoppeltes oder zu koppelndes Ausgangselement, mit welchem der zweite Reibelemententräger im Wesentlichen drehfest, axial bezüglich diesem bewegbar gekoppelt ist, und eine Kraftbeaufschlagungsanordnung, durch welche die Reibelemente der ersten Gruppe und der zweiten Gruppe in Reibwechselwirkung miteinander pressbar sind. Hierbei ist an dem Ausgangselement ein erstes axiales Widerlager für die beiden Gruppen von Reibelementen gebildet und an dem zweiten Reibelemententräger ist ein zweites Widerlager für die beiden Gruppen von Reibelementen gebildet und die Kraftbeaufschlagungsanordnung umfasst ein bezüglich des zweiten Reibelemententrägers und des Ausgangselements abgestütztes und den zweiten Reibelemententräger mit dem zweiten Widerlager axial auf das Ausgangselement mit dem ersten Widerlager zu vorspannendes Kraftbeaufschlagungselement und sieht eine Zylinder/Kolben-Betätigungsanordnung zur Beaufschlagung des Kraftbeaufschlagungselements mit einer Betätigungskraft vor, wobei das Kraftbeaufschlagungselement membran- oder tellerfederartig ausgebildet ist und in seinem radial äußeren Bereich bezüglich des Ausgangselements abgestützt ist sowie in seinem radial inneren Bereich zwischen dem radial äußeren Bereich und dem radial inneren Bereich das Kraftbeauschlagungselement bezüglich des zweiten Reibelemententrägers abgestützt ist.

Weiterer Stand der Technik ist aus der EP 0 853 200 A2, der DE 10 2016 201 208 A1 sowie der EP 2 998 581 A1 bekannt.

Bei Kompressoren, die über eine Kupplung mit dem Antriebselement wahlweise koppelbar bzw. entkoppelbar sind, ergibt sich die Problematik, dass Undichtigkeiten am Gehäuse auftreten und dass zusätzlicher Bauraum benötigt wird.

Ein Gehäuse für eine Kurbelwelle für einen Antriebsstrang eines Kraftfahrzeugs gemäß dem Oberbegriff von Anspruch 1 ist in der EP 0 853 200 A2 gezeigt.

Aufgabe der Erfindung ist es, ein Gehäuse sowie einen Kompressor und eine Kompressor-Einheit mit Kupplung bereitzustellen, die eine bessere Dichtigkeit aufweisen, bei denen der montagebedingte Materialverzug signifikant reduziert wird und bei denen nur wenig zusätzlicher Bauraum benötigt wird.

Diese Aufgabe wird durch den Gegenstand des unabhängigen Patentanspruchs 1 gelöst. Vorteilhafte Weiterbildungen ergeben sich aus den abhängigen Ansprüchen.

Erfindungsgemäß ist die Zuführöffnung, über die das Druckmedium zuführbar ist, mit einem Fitting in Fluidverbindung, welches in dem Gehäuseflansch und dem Gehäusehauptkörper angeordnet ist und mit einer externen Druckmediumsleitung verbindbar ist.

Das Fitting weist ein Durchgangsloch auf, welches abschnittsweise als ein Innenmitnahmeprofil, bspw. als ein Innenmehrkant, insbesondere ein Innensechskant oder als ein Innenmehrrund, insbesondere ein Innensechsrund, wie ein Torx, oder als ein Innensternprofil, ausgebildet ist, und einen ersten Abschnitt und einen zweiten Abschnitt besitzt, wobei der erste Abschnitt zumindest teilweise in eine Öffnung des Gehäusehauptkörpers eingesetzt ist und zwischen dem ersten Abschnitt des Fittings und dem Gehäusehauptkörper eine erste Dichtung angeordnet ist und der zweite Abschnitt zumindest abschnittsweise ein Außengewinde aufweist, welches mit einem entsprechenden Innengewinde des Gehäuseflanschs verschraubt ist und zwischen dem zweiten Abschnitt und dem Gehäuseflansch eine zweite Dichtung angeordnet ist. Das Fitting ist dabei einteilig ausgeführt und ohne Kopf ausgebildet.

Alternativ dazu besitzt das Fitting zumindest eine Hohlschraube und ein Steckverbindungselement, wobei die Hohlschraube einen Kopf und ein Durchgangsloch aufweist und das Steckverbindungselement als eine Hülse ausgebildet ist, welche an ihrer gesamten Außenumfangsfläche von einem Dichtungsmaterial umgeben ist, wobei das Dichtungsmaterial an beiden axialen Enden der Hülse jeweils einen umlaufenden, sich nach außen erstreckenden Wulst aufweist, wobei ein axiales Ende des Steckverbindungselements in dem Gehäuseflansch eingesteckt ist und das andere axiale Ende des Steckverbindungselements in das Durchgangsloch der Hohlschraube eingesteckt ist und die Hohlschraube mit dem Gehäusehauptkörper verschraubt ist, wobei zwischen dem Kopf der Hohlschraube und dem Gehäusehauptkörper eine Dichtung angeordnet ist. Der Kopf der Hohlschraube steht dabei mit einem Kopf-Überstandsmaß von 2-5 mm von einer Gehäuseaußenfläche des Gehäusehauptkörpers vor.

Durch ein erfindungsgemäßes Gehäuse kann der benötigte Bauraum aufgrund der Gestaltung und Anordnung des Fittings reduziert werden. Die erstgenannte Ausgestaltung des Fittings ohne Kopf ermöglicht eine Montage des Fittings in das Gehäuse, ohne eine Kraft auf das Gehäuse aufzubringen, die dieses übermäßig stark verpresst, da diese Kraft normalerweise über den Kontakt des Schraubenkopfes mit dem Gehäuse auf dieses übertragen wird. Somit wird durch ein solches Fitting die Verformung des Gehäuses, sprich, dem Gehäusehauptkörper und dem Gehäuseflansch, und ein Auftreten von Rissen in dem Gehäuse vermieden. Darüber hinaus werden die Positionierungsungenauigkeiten aufgrund der Fertigungstoleranzen durch elastische Verformung der ersten Dichtung ausgeglichen.

Durch das Steckverbindungselement der zweiten Variante wird vermieden, dass die Anzugskraft, welche beim Einschrauben der Hohlschraube in den Gehäusehauptkörper entsteht, übermäßig groß wird und so zu Verformungen und Rissen führt. Die Ungenauigkeiten aufgrund der Fertigungstoleranzen werden durch die Steckverbindung zwischen der Hohlschraube, dem Steckverbindungselement und dem Gehäuseflansch ausgeglichen. Dadurch ist auch sichergestellt, dass die Hohlschraube immer bis zur gewählten bzw. erforderlichen Einschraubtiefe in den Gehäusehauptkörper eingeschraubt werden kann, wodurch der benötigte Bauraum sehr gut planbar ist und ein Kopf-Überstandsmaß, d.h., ein Maß, welches der Kopf der Hohlschraube von dem Gehäuse vorsteht bzw. übersteht, gering ist.

Ferner wird die Erfindung auch durch einen Kompressor gelöst, welcher das erfindungsgemäße Gehäuse, eine Kurbelwelle, die in der Öffnung angeordnet ist, und zumindest einen Kolben aufweist, der in dem zumindest einen Zylinderraum des Gehäuses angeordnet ist und über eine Pleuelstange mit der Kurbelwelle derart verbunden ist, dass eine Rotation der Kurbelwelle eine Hin- und Herbewegung des Kolbens bedingt, wobei die Kurbelwelle an dem flanschseitigen axialen Ende über eine Kupplung mit einem Antriebselement wahlweise drehmomentübertragend verbindbar ist.

Auch eine Kompressor-Einheit mit einem erfindungsgemäßen Kompressor löst die Aufgabe der Erfindung, wobei die Kompressor-Einheit einen erfindungsgemäßen Kompressor und eine Kupplung aufweist, wobei die Kupplung in Axialrichtung an dem flanschseitigen Ende des Kompressors angeordnet ist und ein Drehmomenteinleitungsbauteil der Kupplung mit dem Antriebselement drehmomentübertagend verbindbar ist und ein Drehmomentausleitungsbauteil der Kupplung drehmomentübertragend mit dem Kompressor verbunden ist, wobei eine axiale Verschiebung des in dem Gehäuseflansch eingesetzten Kolbens eine Betätigung der Kupplung bewirkt.

Wenn die Kupplung über eine Kolben-Zylinder-Anordnung betätigt wird, kann das für die Kupplungsbetätigung benötigte Druckmedium, bspw. Druckluft, hierfür einem Druckraum von außerhalb zugeführt werden. Erfindungsgemäß verläuft diese Zuführung durch mehrere Bauteile, wobei ein Austreten des Druckmediums in Form von Undichtigkeiten vermieden wird. Um dies zu realisieren, wird erfindungsgemäß ein Fitting verwendet, das in die mehreren Bauteile eingesetzt wird und somit einen Kanal zur Versorgung des Druckraums mit einem Druckmedium von außerhalb ausbildet und Materialverzüge bei der Montage, bspw. durch Fertigungstoleranzen, vermieden werden. Dadurch kann die Dichtigkeit des Gehäuses bzw. des Kompressors bzw. der Kompressor-Einheit gewährleistet werden, insbesondere im Bereich der Kompressorzylinder. Gleichzeitig kann der benötigte Bauraum reduziert werden, da das Kopf-Überstandsmaß minimiert, oder gar eliminiert, werden kann.

Vorteilhafte Ausführungsformen sind in den Unteransprüchen beansprucht und werden nachfolgend erläutert.

So ist es von Vorteil, wenn die erste Dichtung als ein O-Ring ausgebildet ist und die zweite Dichtung als eine Flüssigdichtung ausgebildet ist. Über die Flüssigdichtung kann das Gewinde abgedichtet werden und der O-Ring kann mit seiner Elastizität die Ungenauigkeiten aufgrund der Fertigungstoleranzen ausgleichen ohne die Dichtigkeit bzw. Dichtheit der Bauteilverbindungen zu beeinträchtigen.

Ebenfalls von Vorteil ist es, insbesondere für eine Variante mit einer einen Kopf aufweisenden Schraube, wenn die Dichtung zwischen dem Kopf der Hohlschraube und dem Gehäusehauptkörper als eine Kupferdichtung ausgebildet ist und das Dichtungsmaterial ein Gummimaterial aufweist. Das Gummimaterial ermöglicht es, dass sich das Dichtungsmaterial elastisch verformen kann und somit leichter mit den anderen Elementen verbindbar ist. Die Kupferdichtung dichtet die Schnittstelle zwischen der Hohlschraube und dem Gehäusehauptkörper ab. Alternativ kann die Kupferdichtung auch als ein O-Ring oder auch als eine Unterlegscheibe mit anvulkanisierter Dichtlippe ausgebildet sein.

Vorteilhafte Ausführungsformen des Gehäuses sehen vor, dass der Gehäusehauptkörper und/oder der Gehäuseflansch ein Metall bzw. eine Metalllegierung, insbesondere Aluminium bzw. eine Aluminiumlegierung oder Grauguss bzw. eine Graugusslegierung aufweisen. Aluminium ist ein Leichtmetall, welches sich sehr gut für den Druckguss eignet. Dadurch kann so ein kostengünstiges und leichtes Gehäuse hergestellt werden. Um Gewicht einzusparen sind auch andere Materialien denkbar, bspw. Magnesium, jedoch sind diese meistens mit deutlich höheren Herstellungskosten verbunden. Grauguss ist etwas schwerer als Aluminium, eignet sich jedoch auch für andere Gießverfahren.

Es hat sich als vorteilhaft herausgestellt, wenn das Fitting und die Zuführöffnung, welche in den Druckraum mündet, sprich, mit dem Druckraum verbunden ist, einen Zuführkanal ausbilden. Der Zuführkanal ermöglicht es, dass das Druckmedium von außerhalb des Gehäuses, bspw. über eine an das Fitting angeschlossene externe Druckmediumsleitung, dem Druckraum zum Druckaufbau auf simple Weise zugeführt wird.

Zur Anbindung der externen Druckmediumsleitung hat es sich als praktikabel erwiesen, wenn das Fitting im ersten Abschnitt ein Innengewinde aufweist oder wenn das Durchgangsloch der Hohlschraube des Fittings ein Innengewinde aufweist.

Eine vorteilhafte Ausführungsform der Kompressor-Einheit sieht vor, dass die Kupplung als eine Einfach- oder eine Mehrfachkupplung und/oder als eine Reibungskupplung ausgebildet ist. Somit kann die Kupplung an die unterschiedlichsten Anforderungen angepasst werden.

Dabei ist es besonders vorteilhaft, wenn die Kupplung im betätigungsfreien Zustand geschlossen ist. Somit ist sichergestellt, dass im betätigungsfreien Zustand eine Drehmomentübertragung von dem Antriebselement auf die Kurbelwelle realisiert ist.

Eine weitere vorteilhafte Ausführungsform sieht hierbei vor, dass die Kurbelwelle und das Drehmomentausleitungsbauteil der Kupplung mittels einer Hirthverbindung drehmomentübertragend verbunden sind. Die Hirthverzahnung ist eine axial wirksame, planseitige Verzahnung zur formschlüssigen Verbindung zweier Wellen und hat den Vorteil, dass sie fest, aber lösbar ist.

Mit anderen Worten umfasst die Erfindung als Steuerungs- bzw. Betätigungsmittel zur Betätigung des Kupplungsbetätigungskolbens die Verwendung von Druckluft, wobei die Druckluftkammer hierbei in dem Gehäuseflansch angeordnet ist. Um die Druckluftkammer mit einer externen Druckleitung zu verbinden, wird eine Hohlschraube in den Gehäusehauptkörper geschraubt und mittels einer Kupferdichtung zwischen dem Kopf der Hohlschraube und dem Gehäusehauptkörper abgedichtet. Ein mit Gummi überzogenes Hülsenelement ist mit einer Seite in die Hohlschraube gesteckt bzw. eingeschoben und mit der anderen Seite in den Flansch gesteckt bzw. eingeschoben. Durch das gummiüberzogene Hülsenelement können die Toleranzen ausgeglichen und eine Verformung der Gehäusebauteile verhindert werden. Alternativ kann das Fitting durch den Gehäusehauptkörper gesteckt und mit dem Gehäuseflansch verschraubt werden. Dabei werden das Fitting und der Gehäusehauptkörper über einen O-Ring und die Gewindeverbindung zwischen dem Fitting und dem Gehäuseflansch über eine Flüssigdichtung abgedichtet. Die Toleranzen werden durch die elastischen Eigenschaften des O-Rings ausgeglichen. Aufgrund des fehlenden Schraubenkopfes wird beim Einschrauben des Fittings keine Kraft auf den Gehäusehauptkörper übertragen und somit Verformungen vermieden. Darüber hinaus ist die Überstandslänge, d.h., die Länge, die das Fitting über den äußeren Rand des Gehäuses bzw. des Gehäusehauptkörpers übersteht, reduziert bzw. minimiert, insbesondere nicht mehr vorhanden, d.h., das Fitting kann plan mit der äußeren Gehäusefläche abschließen oder sogar in das Gehäuse versenkt/vertieft positioniert sein. Dies ermöglicht weitere Bauraumeinsparungen.

Die Erfindung wird nachfolgend anhand von Ausführungsbeispielen mit Bezug auf die beigefügten Figuren näher erläutert. Es zeigen:
Fig. 1 eine perspektivische Darstellung einer erfindungsgemäßen Kompressor-Einheit;
Fig. 2 eine Seitenansicht der Kompressor-Einheit, wobei ein Gehäuse geschnitten dargestellt ist;
Fig. 3 die Seitenansicht analog zu Fig. 2, wobei ferner eine Kupplung ebenfalls geschnitten dargestellt ist;
Fig. 4 eine perspektivische Ansicht eines Gehäuseflanschs mit einem eingesetzten Fitting;
Fig. 5 eine Längsschnittansicht des Gehäuses im Bereich eines Zuführkanals mit einem eingesetzten Fitting in einer ersten beispielhaften Ausführungsform;
Fig. 6 eine detaillierte Längsschnittansicht eines Steckverbindungselements;
Fig. 7 eine Längsschnittansicht des Gehäuses im Bereich des Zuführkanals mit dem eingesetzten Fitting in einer zweiten beispielhaften Ausführungsform; und
Fig. 8 eine vergrößert dargestellte Detailansicht VIII des eingesetzten Fittings aus Fig. 7.

Die Figuren sind lediglich schematischer Natur und dienen nur dem Verständnis der Erfindung. Die gleichen Elemente sind mit denselben Bezugszeichen versehen.

Merkmale der einzelnen Ausführungsbeispiele können auch in anderen Ausführungsbeispielen realisiert werden. Sie sind also untereinander austauschbar.

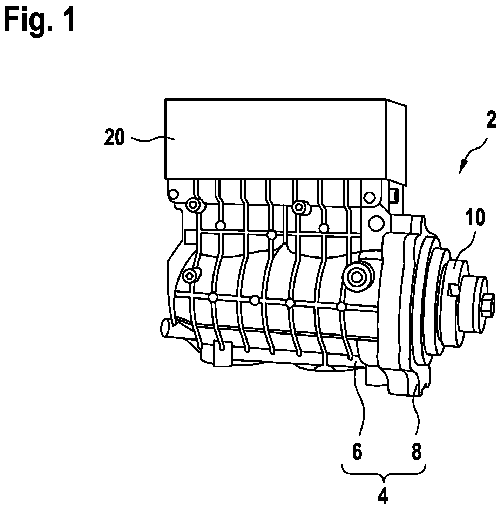

Fig. 1 zeigt eine erfindungsgemäße Kompressor-Einheit 2 in perspektivischer Ansicht. Die Kompressor-Einheit 2 weist ein Gehäuse 4 auf, welches einen Gehäusehauptkörper 6 und einen Gehäuseflansch 8 besitzt. Zur Anbindung an ein Antriebselement (hier nicht gezeigt), weist die Kompressor-Einheit 2 ferner eine Kupplungseinrichtung 10 auf.

Das Gehäuse 4 ist vorzugsweise aus einem Metall oder einer Metalllegierung gegossen. Dabei sind vorteilhafte Ausführungsformen aus Aluminium oder einer Aluminiumlegierung druckgegossen oder aus Grauguss oder einer Graugusslegierung hergestellt, wobei für den Grauguss unterschiedliche Gießverfahren einsetzbar sind. Hierbei ist es auch denkbar, dass der Gehäusehauptkörper 6 aus einem anderen Material gefertigt ist als der Gehäuseflansch 8.

Der Gehäusehauptkörper 6 kann sowohl einteilig als auch zweiteilig gefertigt werden, wobei die in der letzteren Variante zwei separat voneinander hergestellten Bauteile anschließend noch miteinander verbunden, vorteilhafterweise verschweißt, werden.

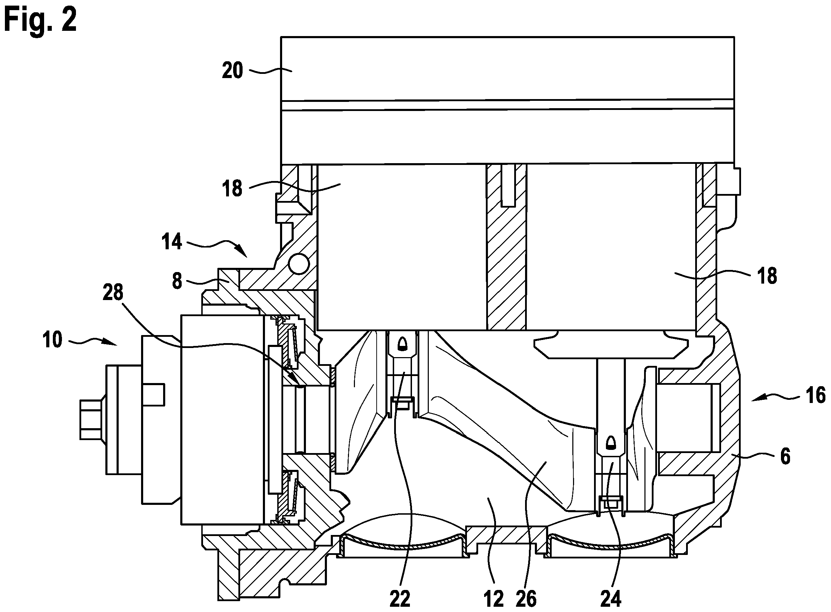

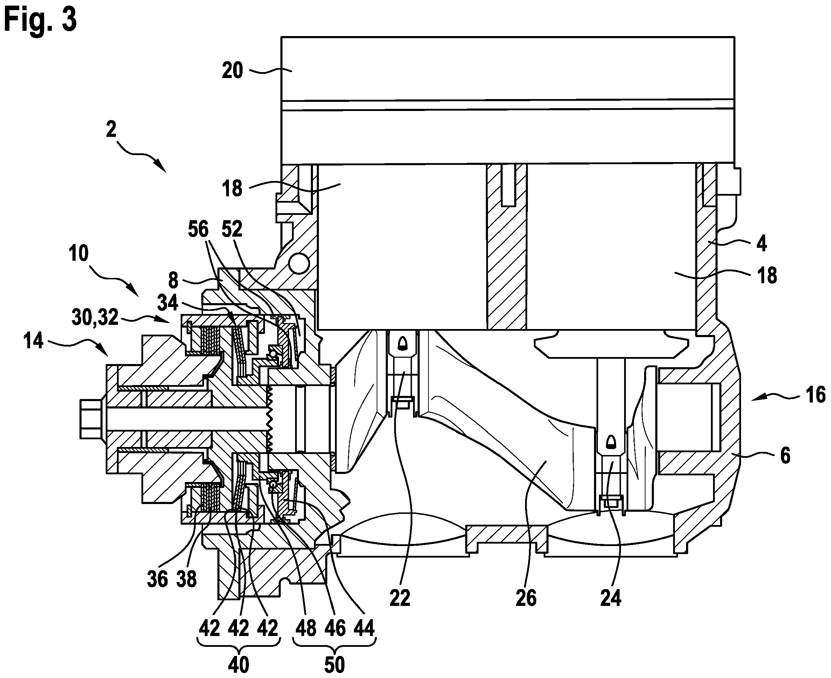

Die Fign. 2 und 3 zeigen das Gehäuse 4 in einer Längsschnittansicht. Hier ist zu erkennen, dass der Gehäusehauptkörper 6 in Axialrichtung eine Öffnung 12 aufweist, welche zumindest an einem axialen Ende 14 offen ist. Das andere axiale Ende 16 ist in der hier gezeigten Ausführungsform geschlossen ausgeführt. Jedoch ist es denkbar, dass auch das axiale Ende 16 offen ist und die Öffnung 12 somit eine Art Durchgangsöffnung ist. Von der Öffnung 12 aus erstrecken sich zwei Zylinderräume 18 in radialer Richtung nach außen bzw. oben (in Fig. 2). Das Gehäuse 4 ist von oben mit einem Deckel 20 verschlossen. In den Zylinderräumen 18 wird jeweils ein Kolben (nicht gezeigt) geführt, welcher über eine Pleuelstange 22, 24 mit einer in der Öffnung 12 angeordneten Kurbelwelle 26 drehmomentübertragend verbunden sind. In diesen Zylinderräumen 18 wird durch die Hin- und Herbewegung der Kolben bspw. ein Gasgemisch in die Zylinderräume 18 eingesaugt und verdichtet.

An dem axialen Ende 14 des Gehäusehauptkörpers 6 ist der Gehäuseflansch 8 angeordnet. Dieser weist eine Durchgangsöffnung 28 auf, durch welche die Kurbelwelle 26 mit der Kupplungseinrichtung 10 drehmomentübertragend verbunden ist.

Die Kupplungseinrichtung 10 ist eine sogenannte "normally-closed"-Kupplungseinrichtung, d.h., die Kupplungseinrichtung 10 ist in einem betätigungsfreien Zustand geschlossen und wird durch eine Betätigung, d.h., Kraftaufbringung, geöffnet. Die Kupplungseinrichtung 10 ist einerseits, wie bereits vorstehend erläutert, mit der Kurbelwelle 26 drehmomentübertragend verbunden und andererseits mit einem Antriebselement (nicht dargestellt, z.B. ein Motor) ebenfalls drehmomentübertragend verbunden. Dabei ist die Kupplungseinrichtung 10 derart ausgelegt, dass sie in einem geschlossenen Zustand ein Drehmoment von dem Antriebselement auf die Kurbelwelle 26 überträgt und in einem geöffneten Zustand diese Drehmomentübertragung unterbricht.

Die Kupplungseinrichtung 10 kann hierbei, wie in Fig. 3 beispielhaft gezeigt, als eine Reibungskupplung 30, genauer gesagt, als eine Lamellenkupplung 32 ausgeführt sein. Die Kupplungseinrichtung 10, hier die Lamellenkupplung 32, ist im betätigungsfreien, oder auch lastfreien, Zustand über eine Federeinrichtung 34 derart vorgespannt, dass erste und zweite Lamellen 36, 38 in Reibschluss miteinander sind und die Lamellenkupplung 32 somit geschlossen ist. Hierbei ist eine der Lamellengruppen 36mit dem Antriebselement drehfest verbunden während die zweite Lamellengruppe 38 mit der Kurbelwelle 26 drehfest verbunden ist. Die Federeinrichtung 34 ist hier beispielhaft als ein Paket 40 mehrerer Tellerfedern 42 ausgebildet, es ist aber auch denkbar, dass die Federeinrichtung 34 aus nur einer Tellerfeder oder einer anderen Federart aufgebaut ist.

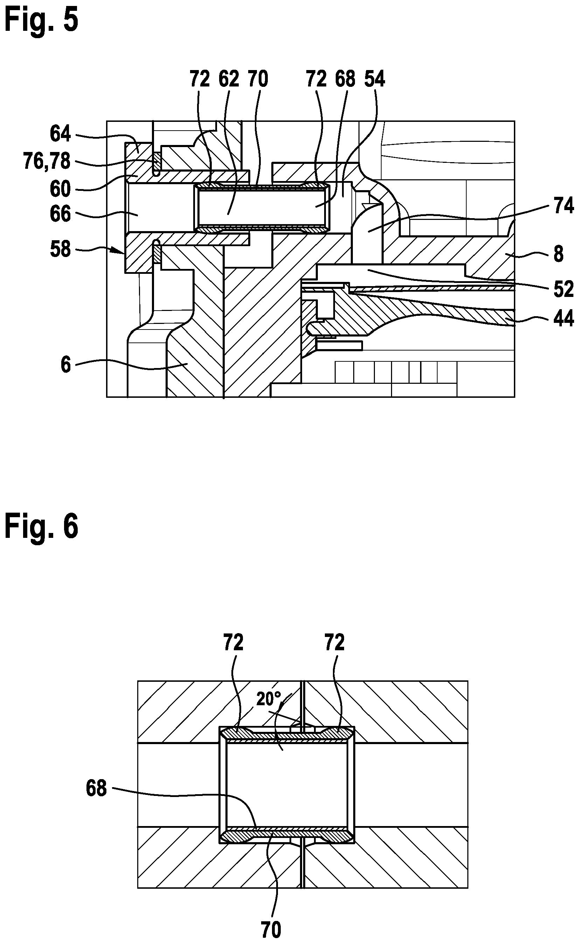

In dem Gehäuseflansch 8 ist ein Kolben 44 aufgenommen, welcher zusammen mit einem Betätigungslager 46 und einem topfartig ausgebildeten Betätigungselement 48 als eine Betätigungseinrichtung 50 bzw. als eine Ausrückeinrichtung 50 für die Kupplungseinrichtung 10 dient. Das Betätigungslager 46 ist hierbei vorzugsweise als ein Wälzlager, bspw. ein Kugellager, ausgebildet. Die Betätigungseinrichtung 50 wird aufgrund der Druckverhältnisse in einem zwischen dem Gehäuseflansch 8 und dem Kolben 44 ausgebildeten Druckraum 52 betätigt, d.h., in Axialrichtung in Richtung zur Kupplungseinrichtung 10 hin verschoben. Hierfür wird der Druckraum 52 über einen Zuführkanal 54 (siehe Fign. 5, 7 und 8) mit einem von extern zugeführten Druckmedium, bspw. Druckluft, befüllt. Der Zuführkanal 54 befindet sich in einer zur dargestellten Längsschnittebene um 90° um die Längsachse gedrehten Ebene.

Um ein Austreten des Druckmediums aus dem Druckraum 52 und somit einen Druckabfall zu vermeiden, ist der Kolben 44 mit T-förmig ausgebildeten Dichtungen 56 an seinen beiden radialen Enden gegenüber dem Gehäuseflansch 8 abgedichtet.

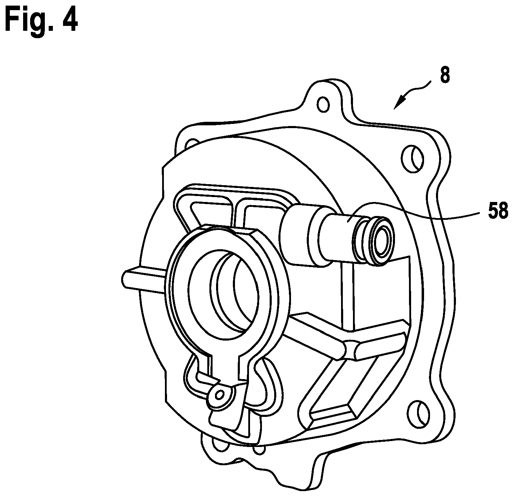

Fig. 4 zeigt den Gehäuseflansch 8 in perspektivischer Ansicht von hinten. D.h., der zu sehende Bereich ist der Teil des Gehäuseflanschs 8, der im zusammengebauten Zustand innerhalb des Gehäusehauptkörpers 6 angeordnet ist. In dieser Ansicht ist ein als Fitting 58 bezeichnetes Verbindungselement zum Verbinden des Druckraums 52 mit der externen Druckmediumsleitung bereits in den Gehäuseflansch 8 eingesetzt und erstreckt sich hier beispielhaft in horizontaler Richtung radial nach außen in einer Ebene oberhalb der Rotationsachse. Das Fitting 58 wird nachfolgend erläutert.

Die Fig. 5 zeigt eine erste beispielhafte Ausführungsform des Fittings 58. In dieser ersten beispielhaften Ausführungsform ist das Fitting 58 mehrteilig ausgeführt und weist ein als eine Hohlschraube 60 ausgeführtes erstes Element und ein als ein Steckverbindungselement 62 ausgeführtes zweites Element auf.

Die Hohlschraube 60 weist einen Kopf 64 sowie ein zentral angeordnetes, sich in Längsrichtung der Hohlschraube 60 erstreckendes Durchgangsloch 66 auf, und besitzt ein Außengewinde, mit dem sie in den Gehäusehauptkörper 6 geschraubt wird. Der Kopf 64 besitzt ein Kopf-Überstandsmaß, d.h., ein Maß, mit welchem der Kopf 64 der Hohlschraube 60 von der Gehäuseaußenfläche vorsteht bzw. übersteht. Das Kopf-Überstandsmaß beträgt 2-5 mm. In der erfindungsgemäßen Lösung, wie hier beispielhaft gezeigt, kann dieses Maß auf ein Minimum reduziert werden und insbesondere kann gewährleistet werden, dass dieses Maß eingehalten wird, da es hier bei der Montage nicht zu Materialverzügen kommt, welche die Folge haben können, dass das Fitting 58 nicht in der gewünschten Tiefe eingeschraubt werden kann.

Eine alternative, nicht gezeigte Ausführungsform beinhaltet ein solches zweiteiliges Fitting, jedoch ist statt einer Hohlschraube 60 mit einem Kopf 64 ein Hohlstift ohne Kopf vorgesehen, wobei dieser Hohlstift ein zentral verlaufendes Durchgangsloch aufweist, welches abschnittsweise als ein Innenmitnahmeprofil, wie ein Innenmehrkant oder ein Innenmehrrund, ausgebildet ist, um den Hohlstift in das Gehäuse schrauben zu können.

Das Steckverbindungselement 62 ist als eine, vorzugsweise dünnwandige, Hülse 68 ausgeführt, welche an ihrer gesamten Außenumfangsfläche von einem Dichtungsmaterial 70 umgeben ist. An beiden axialen Enden der Hülse 68 weist das Dichtungsmaterial 70 jeweils einen umlaufenden, sich nach außen erstreckenden Wulst 72 auf. Die Ausgestaltung des Steckverbindungselements 62 ist in Fig. 6 schematisch, vereinfacht in zwei Bauteile eingesetzt dargestellt und dient zum besseren Verständnis.

Um beim Einsetzen des Steckverbindungselements 62 in die jeweils dafür vorgesehenen Öffnungen, in Fig. 5 das Durchgangsloch 66 der Hohlschraube 60 einerseits und eine Zuführöffnung 74 andererseits, das Dichtungsmaterial 70 nicht zu beschädigen, können die dem Dichtungsmaterial 70 zugewandten Ränder bzw. Kanten der Öffnungen abgeschrägt sein, vorzugsweise mit einem Winkel von 20° (siehe Fig. 6), bspw. indem eine Fase vorgesehen wird. Diese Abschrägung dient dem Dichtungsmaterial 70 beim Einsetzen des Steckverbindungselements 62 in die jeweilige Öffnung sozusagen als Führung.

Die Wulste 72 ermöglichen, dass die Verbindung zwischen der Hohlschraube 60 (und somit auch dem Gehäusehauptkörper 6), dem Steckverbindungselement 62 und dem Gehäuseflansch 8 dicht bleibt, auch wenn eine Öffnung im Gehäusehauptkörper, in welche die Hohlschraube 60 eingeschraubt ist, und eine Öffnung im Gehäuseflansch 8, in welche das Steckverbindungselement 62 eingesteckt ist, aufgrund von Fertigungstoleranzen nicht exakt konzentrisch zueinander auszurichten sind. Um ein Austritt von Fluid, wie bspw. Öl, welches für die Kupplungseinrichtung 10 benötigt wird, zwischen dem Gehäusehauptkörper 6 und der Hohlschraube 60 zu verhindern, ist zwischen dem Kopf 64 der Hohlschraube 60 und dem Gehäusehauptkörper 6 eine Dichtung 76, bspw. eine Flachdichtung, vorzugsweise als eine Kupferdichtung 78 ausgebildet, angeordnet.

Die Zuführöffnung 74 bildet zusammen mit der Hülse 68 des Steckverbindungselements 62 und dem Durchgangsloch 66 der Hohlschraube 60 den Zuführkanal 54 aus. Das Steckverbindungselement 62 ist in unterschiedlichen Durchmessern und verschiedensten Längen ausführbar. Zur Anbindung der externen Druckmediumsleitung weist das Durchgangsloch 66 mindestens im Bereich des Kopfes 64 ein Innengewinde (nicht gezeigt) auf.

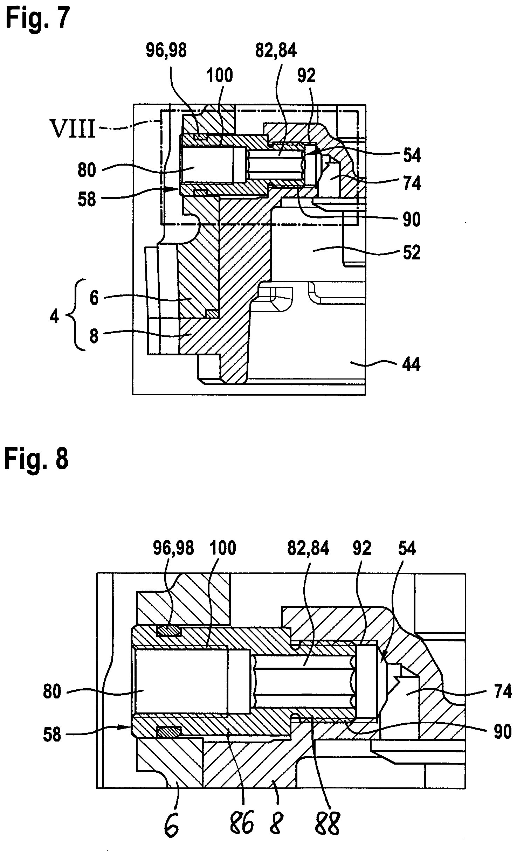

Die Fign. 7 und 8 zeigen eine zweite beispielhafte Ausführungsform des Fittings 58, welches einteilig ausgeführt ist. Das Fitting 58 weist ein Durchgangsloch 80 auf, welches zumindest abschnittsweise als ein Innenmitnahmeprofil 82, hier beispielhaft als ein Innensechskant 84, ausgebildet ist. Alternativ sind aber auch andere Innenmehrkantprofile oder auch Innenmehrrundprofile denkbar. Im Bereich des Außendurchmessers weist das Fitting 58 zwei Abschnitte 86, 88 auf, die in der hier gezeigten Ausführungsform unterschiedliche Außendurchmesser aufweisen. Jedoch kann das Fitting 58 auch über seine gesamte Länge lediglich einen Außendurchmesser aufweisen. Der zweite Abschnitt 88 besitzt ein Außengewinde 90, welches zum Einsetzen des Fittings 58 in ein Innengewinde 92 in dem Gehäuseflansch 8 geschraubt wird. Zum Einschrauben wird ein Schraubenschlüssel mit einem zum dem Innenmitnahmeprofil 82 passenden Außenprofil verwendet, weshalb auf einen Kopf 64, wie in der ersten beispielhaften Ausführungsform gezeigt (siehe Fig. 5), verzichtet werden kann.

Der erste Abschnitt 86 weist eine umlaufende Nut 94 auf, in welche eine erste Dichtung 96 eingesetzt ist, welche das Fitting 58 gegenüber dem Gehäusehauptkörper 6 abdichtet. Die Schraubverbindung zwischen dem Außengewinde 90 und dem Innengewinde 92 ist über eine zweite Dichtung (nicht dargestellt), eine sogenannte Flüssigdichtung abgedichtet.

In dem hier gezeigten Ausführungsbeispiel ist die erste Dichtung 96 als ein O-Ring 98 ausgebildet. Die erste Dichtung 96 muss derart gewählt sein, dass sie den aufgrund von Fertigungstoleranzen auftretenden radialen Versatz der Öffnung in dem Gehäusehauptkörper 6 und der Öffnung in dem Gehäuseflansch 8, in die das Fitting 58 eingesetzt wird, ausgleicht, ohne dass die Verbindung undicht wird.

Das Durchgangsloch 80 weist in seinem nach außen gerichteten Bereich ein Innengewinde 100 auf, welches, analog zu dem Innengewinde in dem Durchgangsloch 66 der Hohlschraube 60 des ersten Ausführungsbeispiels, zur Anbindung der externen Druckmediumsleitung dient. In diesem Ausführungsbeispiel wird der Zuführkanal 54 von dem Durchgangsloch 80 des Fittings 58 und der Zuführöffnung 74 gebildet.

Allgemein kann gesagt werden, dass der Zuführkanal 54 in den gezeigten Ausführungsbeispielen aus einem axial verlaufenden Abschnitt (der Zuführöffnung 74) und einem radial verlaufenden Abschnitt (die Öffnungen, in die das Fitting 58 eingesetzt ist) ausgebildet ist.

### Bezugszeichenliste

- 2: Kompressor-Einheit
- 4: Gehäuse
- 6: Gehäusehauptkörper
- 8: Gehäuseflansch
- 10: Kupplungseinrichtung
- 12: Öffnung
- 14: axiales Ende
- 16: axiales Ende
- 18: Zylinderraum
- 20: Deckel
- 22: Pleuelstange
- 24: Pleuelstange
- 26: Kurbelwelle
- 28: Öffnung
- 30: Reibungskupplung
- 32: Lamellenkupplung
- 34: Federeinrichtung
- 36: erste Lamelle
- 38: zweite Lamelle
- 40: Paket
- 42: Tellerfeder
- 44: Kolben
- 46: Betätigungslager
- 48: Betätigungselement
- 50: Betätigungseinrichtung
- 52: Druckraum
- 54: Zuführkanal
- 56: T-förmige Dichtung
- 58: Fitting
- 60: Hohlschraube
- 62: Steckverbindungselement
- 64: Kopf
- 66: Durchgangsloch
- 68: Hülse
- 70: Dichtungsmaterial
- 72: Wulst
- 74: Zuführöffnung
- 76: Dichtung
- 78: Kupferdichtung
- 80: Durchgangsloch
- 82: Innenmitnahmeprofil
- 84: Innensechskant
- 86: erster Abschnitt
- 88: zweiter Abschnitt
- 90: Außengewinde
- 92: Innengewinde
- 94: Nut
- 96: erste Dichtung
- 98: O-Ring
- 100: Innengewinde

## Patentansprüche

1. Gehäuse (4) für eine Kurbelwelle (26) für einen Antriebsstrang eines Kraftfahrzeugs, mit
einem Gehäusehauptkörper (6), welcher eine Öffnung (12), die sich in axialer Richtung erstreckt, und zumindest einen Zylinderraum (18) aufweist, der sich in radialer Richtung durch den Gehäusehauptkörper (6) bis zur Öffnung (12) erstreckt, wobei die Öffnung (12) an einem ersten axialen Ende (14) des Gehäusehauptkörpers (6) offen ist, und
einem Gehäuseflansch (8), welcher an dem ersten axialen Ende (14) des Gehäusehauptkörpers (6) angeordnet ist, wobei in dem Gehäuseflansch (8) ein Kolben (44) derart axial verschieblich eingesetzt ist, dass zwischen dem Gehäuseflansch (8) und dem Kolben (44) ein Druckraum (52) ausgebildet ist, der mittels eines Druckmediums mit Druck beaufschlagbar ist und zur axialen Verschiebung des Kolbens (44) dient, wobei der Druckraum (52) mit einer Zuführöffnung (74) verbunden ist, über die das Druckmedium zuführbar ist, wobei die Zuführöffnung (74) mit einem Fitting (58) in Fluidverbindung ist, welches in dem Gehäuseflansch (8) und dem Gehäusehauptkörper (6) angeordnet ist und mit einer externen Druckmediumsleitung verbindbar ist,
wobei das Fitting (58) ein Durchgangsloch (80) aufweist, welches abschnittsweise als ein Innenmitnahmeprofil (82) ausgebildet ist, und einen ersten Abschnitt (86) und einen zweiten Abschnitt (88) besitzt, wobei zwischen dem ersten Abschnitt (86) des Fittings (58) und dem Gehäusehauptkörper (6) eine erste Dichtung (96) angeordnet ist und der zweite Abschnitt (88) ein Außengewinde (90) aufweist, und zwischen dem zweiten Abschnitt (88) und dem Gehäuseflansch (8) eine zweite Dichtung angeordnet ist;
**dadurch gekennzeichnet, dass**
das Fitting (58) einteilig ausgeführt und ohne Kopf ausgebildet ist;
der erste Abschnitt (86) zumindest teilweise in eine Öffnung des Gehäusehauptkörpers (6) eingesetzt ist; und
das Außengewinde (90) des zweiten Abschnitts (88) mit einem entsprechenden Innengewinde (92) des Gehäuseflanschs (8) verschraubt ist; oder
wobei das Fitting (58) zumindest eine Hohlschraube (60) und ein Steckverbindungselement (62) besitzt, wobei die Hohlschraube (60) einen Kopf (64) und ein Durchgangsloch (66) aufweist, und wobei das Steckverbindungselement (62) als eine Hülse (68) ausgebildet ist, wobei ein axiales Ende des Steckverbindungselements (62) in dem Gehäuseflansch (8) eingesteckt ist und das andere axiale Ende des Steckverbindungselements (62) in dem Durchgangsloch (66) der Hohlschraube (60) eingesteckt ist und die Hohlschraube (60) mit dem Gehäusehauptkörper (6) verschraubt ist, wobei zwischen dem Kopf (64) der Hohlschraube (60) und dem Gehäusehauptkörper (6) eine Dichtung (76) angeordnet ist;
**dadurch gekennzeichnet, dass**
die Hülse (68) an ihrer gesamten Außenumfangsfläche von einem Dichtungsmaterial (70) umgeben ist;
das Dichtungsmaterial (70) an beiden axialen Enden der Hülse (68) jeweils einen umlaufenden, sich nach außen erstreckenden Wulst (72) aufweist; und
der Kopf (64) der Hohlschraube (60) mit einem Kopf-Überstandsmaß von 2 - 5 mm von einer Gehäuseaußenfläche des Gehäusehauptkörpers (6) vorsteht.

2. Gehäuse (4) gemäß Anspruch 1, **dadurch gekennzeichnet, dass** die erste Dichtung (96) als ein O-Ring (98) ausgebildet ist und die zweite Dichtung als eine Flüssigdichtung ausgebildet ist.

3. Gehäuse (4) gemäß Anspruch 1, **dadurch gekennzeichnet, dass** die Dichtung (76) zwischen dem Kopf (64) der Hohlschraube (60) und dem Gehäusehauptkörper (6) als eine Kupferdichtung (78) ausgebildet ist und das Dichtungsmaterial (70) aus einem Gummimaterial ausgebildet ist.

4. Gehäuse (4) gemäß einem der Ansprüche 1 bis 3, **dadurch gekennzeichnet, dass** der Gehäusehauptkörper (6) und/oder der Gehäuseflansch (8) Aluminium, Grauguss oder eine Aluminium- oder Graugusslegierung aufweisen.

5. Gehäuse (4) gemäß einem der Ansprüche 1 bis 4, **dadurch gekennzeichnet, dass** das Fitting (58) und die Zuführöffnung (74) einen Zuführkanal (54) ausbilden.

6. Gehäuse (4) gemäß einem der Ansprüche 1, 2, 4 und 5, **dadurch gekennzeichnet, dass** das Fitting (58) im ersten Abschnitt (86) ein Innengewinde (100) aufweist, welches mit einer externen Druckmediumsleitung verbindbar ist.

7. Gehäuse (4) gemäß einem der Ansprüche 1, 3, 4 und 5, **dadurch gekennzeichnet, dass** das Durchgangsloch (66) der Hohlschraube (60) zur Verbindung mit einer externen Druckmediumsleitung ein Innengewinde aufweist.

8. Kompressor zum Verdichten eines Gases oder eines Gasgemischs, mit
einem Gehäuse (4) nach einem der vorhergehenden Ansprüche,
einer Kurbelwelle (26), welche in der Öffnung (12) angeordnet ist,
zumindest einem Kolben, welcher in dem zumindest einen Zylinderraum (18) des Gehäuses (4) angeordnet ist und über eine Pleuelstange (22; 24) mit der Kurbelwelle (26) derart verbunden ist, dass eine Rotation der Kurbelwelle (26) eine Hin- und Herbewegung des Kolbens bedingt,
wobei die Kurbelwelle (26) an dem flanschseitigen axialen Ende über eine Kupplung (10) mit einem Antriebselement wahlweise drehmomentübertragend verbindbar ist.

9. Kompressor-Einheit (2), mit
einem Kompressor gemäß Anspruch 8, und
einer Kupplung (10), wobei die Kupplung (10) in Axialrichtung an dem flanschseitigen Ende des Kompressors angeordnet ist und ein Drehmomenteinleitungsbauteil der Kupplung (10) mit einem Antriebselement drehmomentübertragend verbindbar ist und ein Drehmomentausleitungsbauteil der Kupplung (10) drehmomentübertragend mit dem Kompressor verbunden ist, **dadurch gekennzeichnet, dass** eine axiale Verschiebung des in dem Gehäuseflansch (8) eingesetzten Kolbens (44) eine Betätigung der Kupplung (10) bewirkt.

10. Kompressor-Einheit (2) gemäß Anspruch 9, **dadurch gekennzeichnet, dass** die Kupplung (10) als eine Einfach- oder Mehrfachkupplung und/oder als eine Reibungskupplung (30) ausgebildet ist.

11. Kompressor-Einheit (2) gemäß Anspruch 9 oder 10, **dadurch gekennzeichnet, dass** die Kupplung (10) im betätigungsfreien Zustand geschlossen ist.

12. Kompressor-Einheit (2) gemäß einem der Ansprüche 9 bis 11, **dadurch gekennzeichnet, dass** die Kurbelwelle (26) und das Drehmomentausleitungsbauteil der Kupplung (10) mittels einer Hirthverbindung drehmomentübertragend verbunden sind.

## Claims

1. A housing (4) for a crankshaft (26) for a drive train of a motor vehicle, having
a main housing body (6) that has an opening (12) that extends in axial direction, and at least one cylinder chamber (18) that extends in radial direction through the main housing body (6) to the opening (12), the opening (12) being open at a first axial end (14) of the main housing body (6); and
a housing flange (8) that is arranged at the first axial end (14) of the main housing body (6), a piston (44) being positioned in this housing flange (8) such that it can be moved axially so as to form a pressure chamber (52) between the housing flange (8) and the piston (44), it being possible to apply pressure to this pressure chamber (52) by means of a pressure medium and the pressure chamber (52) serving to move the piston (44) axially, the pressure chamber (52) being connected to a supply opening (74) via which the pressure medium can be supplied, the supply opening (74) being in fluid connection with a fitting (58) that is arranged in the housing flange (8) and in the main housing body (6) and being connectable to an external pressure medium line,
the fitting (58) having a clearance hole (80), part of which takes the form of an internal driver profile (82), and having a first portion (86) and a second portion (88), a first seal (96) being arranged between the first portion (86) of the fitting (58) and the main housing body (6), the second portion (88) having an external thread (90) and a second seal being arranged between the second portion (88) and the housing flange (8),
**characterised in that**,
the fitting (58) is formed in one piece and is configured without a head;
at least part of the first portion (86) is inserted into an opening of the main housing body (6); and
the external thread (90) of the second portion (88) is screwed to a corresponding internal thread (92) of the housing flange (8);
or
the fitting (58) having at least one hollow screw (60) and one plug connection element (62), this hollow screw (60) having a head (64) and a clearance hole (66), and the plug connection element (62) taking the form of a sleeve (68), one axial end of the plug connection element (62) being inserted in the housing flange (8), the other axial end of the plug connection element (62) being inserted in the clearance hole (66) of the hollow screw (60) and the hollow screw (60) being screwed to the main housing body (6), a seal (76) being arranged between the head (64) of the hollow screw (60) and the main housing body (6);
**characterised in that**,
the entire outer circumferential surface of the sleeve (68) is surrounded by a sealing material (70);
this sealing material (70) has a circumferential, outward-extending bead (72) at either axial end of the sleeve (68); and
the head (64) of the hollow screw (60) projects from an outer housing face of the main housing body (6) by a head projection length of 2 to 5mm.

2. A housing (4) according to claim 1, **characterised in that** the first seal (96) takes the form of an O-ring (98), and the second seal takes the form of a liquid seal.

3. A housing (4) according to claim 1, **characterised in that** the seal (76) between the head (64) of the hollow screw (60) and the main housing body (6) takes the form of a copper seal (78), and the sealing material is made of a rubber material.

4. A housing (4) according to any one of claims 1 to 3, **characterised in that** the main housing body (6) and/or the housing flange (8) are made of aluminium, grey cast iron or an aluminium and grey cast iron alloy.

5. A housing (4) according to any one of claims 1 to 4, **characterised in that** the fitting (58) and the supply opening (74) form a supply channel (54).

6. A housing (4) according to any one of claims 1, 2, 4 and 5, **characterised in that** the first portion (86) of the fitting (58) has an internal thread (100) that can be connected to an external pressure medium line.

7. A housing (4) according to any one of claims 1, 3, 4 and 5, **characterised in that** the clearance hole (66) of the hollow screw (60) has an internal thread for connection to an external pressure medium line.

8. A compressor for compressing a gas or a gas mixture, having
a housing (4) according to any one of the preceding claims,
a crankshaft that is arranged in the opening (12),
at least one piston that is arranged in the at least one cylinder chamber (18) of the housing (4) and is connected via a connecting rod (22; 24) to the crankshaft in such a manner that a rotation of the crankshaft (26) causes the piston to move back and forth,
it being possible, as an option, to connect the flange-side axial end of the crankshaft (26) to a drive element via a clutch so as to transmit torque.

9. A compressor unit (2), having
a compressor according to claim 8, and
a clutch (10), this clutch (10) being arranged in axial direction at the flange-side end of the compressor, and it being possible to connect a torque input component of the clutch (10) to a drive element so as to transmit torque, and a torque output element of the clutch (10) being connected to the compressor so as to transmit torque, **characterised in that** an axial movement of the piston (44) positioned in the housing flange (8) causes an actuation of the clutch (10).

10. A compressor unit (2) according to claim 9, **characterised in that** the clutch (10) takes the form of a single or multiple clutch and/or a friction clutch (30).

11. A compressor unit (2) according to claim 9 or 10, **characterised in that** the clutch (10) is closed in the non-actuated state.

12. A compressor unit (2) according to any one of claims 9 to 11, **characterised in that** the crankshaft (26) and the torque output component of the clutch (10) are connected so as to transmit torque by means of a Hirth coupling.

## Revendications

1. Carter (4) d'un arbre (26) de manivelle d'une chaîne cinématique d'un véhicule automobile, comprenant
un corps (6) principal de carter, qui a une ouverture (12), qui s'étend dans la direction axiale, et au moins un espace (18) de cylindre, qui s'étend dans une direction radiale dans le corps (6) principal de carter jusqu'à l'ouverture (12), dans lequel l'ouverture (12) est ouverte à une première extrémité (14) axiale du corps (6) principal de carter, et
une bride (8) de carter, qui est disposée à la première extrémité (14) axiale du corps (6) principal de carter, dans lequel, dans la bride (8) de carter, est inséré, à coulissement axial, un piston (44), de manière à former entre la bride (8) de carter et le piston (44) un espace (52) de pression, qui peut être soumis à une pression au moyen d'un fluide sous pression et qui sert à déplacer axialement le piston (44), dans lequel l'espace (52) de pression communique avec une ouverture (74) d'amenée, par laquelle le fluide sous pression peut être amené, dans lequel l'ouverture (74) d'amenée est en communication de fluide avec un raccord (58), qui est monté dans la bride (8) de carter et le corps (6) principal de carter et qui peut communiquer avec un conduit extérieur pour du fluide sous pression,
dans lequel le raccord (58) a un trou (80) de passage, qui est constitué par endroits sous la forme d'un profilé (82) intérieur d'entraînement et possède une première partie (86) et une deuxième partie (88), dans lequel, entre la première partie (86) du raccord (58) et le corps (6) principal de carter, est disposée une première étanchéité (96) et la deuxième partie (88) a un filetage (90) extérieur, et entre la deuxième partie (88) et la bride (8) de carter, est disposée une deuxième étanchéité ;
**caractérisé en ce que**
le raccord (58) est réalisé en une seule pièce et est constitué sans tête ;
la première partie (86) est insérée au moins en partie dans une ouverture du corps (6) principal de carter ; et
le filetage (90) extérieur de la deuxième partie (88) est vissé avec un taraudage (92) correspondant de la bride (8) de carter ; ou
dans lequel le raccord (58) possède au moins une vis (60) creuse et un élément (62) de liaison par enfichage, dans lequel la vis (60) creuse a une tête (64) et un trou (66) de passage, et dans lequel l'élément (62) de liaison par enfichage est constitué sous la forme d'une douille (68), dans lequel une extrémité axiale de l'élément (62) de liaison par enfichage est enfichée dans la bride (8) de carter et l'autre extrémité axiale de l'élément (62) de liaison par enfichage est enfichée dans le trou (66) de passage de la vis (60) creuse et la vis (60) creuse est vissée avec le corps (6) principal de carter, dans lequel une étanchéité (76) est disposée entre la tête (64) de la vis (60) creuse et le corps (6) principal de carter ;
**caractérisé en ce que**
la douille (68) est entourée sur toute sa surface périphérique extérieure d'un matériau (70) d'étanchéité ;
le matériau (70) d'étanchéité, aux deux extrémités axiales de la douille (68), a respectivement un bourrelet (72) faisant le tour et s'étendant vers l'extérieur ; et
la tête (64) de la vis (60) creuse fait saillie, avec une valeur de dépassement de tête de 2 à 5 mm, d'une surface extérieure de carter du corps (6) principal de carter.

2. Carter (4) suivant la revendication 1, **caractérisé en ce que** la première étanchéité (96) est constituée sous la forme d'un joint (98) torique et la deuxième étanchéité est constituée sous la forme d'une étanchéité au liquide.

3. Carter (4) suivant la revendication 1, **caractérisé en ce que** l'étanchéité (76) entre la tête (64) de la vis (60) creuse et le corps (6) principal de carter est constituée sous la forme d'une étanchéité (78) en cuivre et le matériau (70) d'étanchéité est en un matériau en caoutchouc.

4. Carter (4) suivant l'une des revendications 1 à 3, **caractérisé en ce que** le corps (6) principal de carter et/ou la bride (8) carter comportent de l'aluminium, de la fonte grise ou un alliage d'aluminium ou de fonte grise.

5. Carter (4) suivant l'une des revendications 1 à 4, **caractérisé en ce que** le raccord (58) et l'ouverture (74) d'amenée forment un conduit (54) d'amenée.

6. Carter (4) suivant l'une des revendications 1, 2, 4 et 5, **caractérisé en ce que** le raccord (58) a, dans la première partie (86), un taraudage (100), qui peut être relié à un conduit extérieur pour du fluide sous pression.

7. Carter (4) suivant l'une des revendications 1, 3, 4 et 5, **caractérisé en ce que** le trou (66) de passage de la vis (60) creuse a un taraudage pour la liaison avec un conduit extérieur pour du fluide sous pression.

8. Compresseur de compression d'un gaz ou d'un mélange gazeux, comprenant
un carter (4) suivant l'une des revendications précédentes,
un arbre (26) de manivelle, qui est disposé dans l'ouverture (12),
au moins un piston, qui est disposé dans le au moins un espace (18) de cylindre du carter (4) et qui est relié à l'arbre (26) de manivelle par une bielle (22 ; 24), de manière à ce qu'une rotation de l'arbre (26) de manivelle entraîne un mouvement d'aller et retour du piston,
dans lequel l'arbre (26) de manivelle peut, à l'extrémité axiale du côté de la bride, être relié à transmission de couple au choix avec un élément d'entraînement par un accouplement (10).

9. Groupe (2) compresseur, comprenant
un compresseur suivant la revendication 8, et
un accouplement (10), l'accouplement (10) étant disposé dans la direction axiale à l'extrémité du côté de la bride du compresseur, et une pièce d'entrée du couple de l'accouplement (10) peut, avec transmission du couple, être reliée à un élément d'entraînement, et une pièce de sortie du couple de l'accouplement (10) est reliée, avec transmission du couple, au compresseur, **caractérisé en ce qu'**un déplacement axial du piston (44), inséré dans la bride (8) du carter, provoque un actionnement de l'accouplement (10).

10. Groupe ; (2) compresseur suivant la revendication 9, **caractérisé en ce que** l'accouplement (10) est constitué sous la forme d'un accouplement simple ou multiple et/ou sous la forme d'un accouplement (30) à friction.

11. Groupe (2) compresseur suivant la revendication 9 ou 10, **caractérisé en ce que** l'accouplement (10) est fermé dans l'état sans actionnement.

12. Groupe (2) compresseur suivant l'une des revendications 9 à 11, **caractérisé en ce que** l'arbre (26) de manivelle et la pièce de sortie de couple de l'accouplement (10) sont reliés à transmission de couple au moyen d'une liaison Hirth.
